# EUROPEAN PATENT APPLICATION

(11) **EP 3 482 715 A1**
(43) Date of publication of application: **15.05.2019**
(21) Application number: 17203270.8
(22) Date of filing: 23.11.2017
(51) Int. Cl.: A61C 13/00, G01S 19/14, G01S 19/35

(54) **MICROCHIP DENTURE IMPLANT AND READER SYSTEM AND METHOD**

(30) Priority: 09.11.2017 US 201715807863
(71) Applicant: Danaei-Moghaddam, Vahid Dan, Vaughan, Ontario L4L 0B1 (CA)
(72) Inventor: Danaei-Moghaddam, Vahid Dan, Vaughan, Ontario L4L 0B1 (CA)
(74) Representative: Gulde & Partner

(57) **Abstract**

A microchip denture implant and reader system (100) including a microchip (110) having a transceiver for transmitting a wireless signal containing information relating to a user, and an external reader scanner (130) in communication with the microchip. The microchip adapted to be mounted in a dental prosthetic item (10) to be applied to a mouth of the user. The external reader when activated is configured to scan and provide access to the information relating to the user on a display. The microchip and dental prosthetic item when installed in the mouth of the user are configured to provide access to the information relating to the user at a given time.

## Description

### BACKGROUND OF THE INVENTION

The following includes information that may be useful in understanding the present disclosure. It is not an admission that any of the information provided herein is prior art nor material to the presently described or claimed inventions, nor that any publication or document that is specifically or implicitly referenced is prior art.

### 1. FIELD OF THE INVENTION

The present invention relates generally to the field of dentistry and more specifically relates to dental accessories and tracking devices.

### 2. DESCRIPTION OF RELATED ART

Numerous electronic devices have been introduced to track and locate mobile assets, such as for example, trucks, rail cars, and shipping containers. Hundreds of thousands of these assets have been equipped with tracking and locating transducers. The most sophisticated systems permit location of an asset to within a few feet. Tracking devices, such as radio frequency identification tags (RFID), are increasingly used to mark items to provide a convenient means of determining the location and/or tracking the movement of the article on which the tag is mounted. Such RFID tags or microchips are also increasingly used to provide identification and location information on people and animals. However, a reliable method of applying and using a microchip has not been created for many items of value or for tracking important items/people of concern. A suitable, affordable, non invasive solution is desired.

U.S. Pub. No. 2009/0237236 to Sami Maassarani relates to a tooth located gps person tracking and location method and apparatus. The described tooth located gps person tracking and location method and apparatus includes an apparatus and method for remotely monitoring the location of a person through a microchip mounted in a tooth of a person which communicates by a communication link to a Global Positioning System to obtain geographic location information relating to the physical location of a person, and by another communication link to a remote tracking device to obtain the geographic information to determine and provide an indication of the physical location of a person. The microchip is disposed in a cavity formed in a tooth of a person which is filled with dental filling material to fix the microchip in the tooth.

### BRIEF SUMMARY OF THE INVENTION

In view of the foregoing disadvantages inherent in the known dentistry art, the present disclosure provides a novel microchip denture implant and reader system and method. The general purpose of the present disclosure, which will be described subsequently in greater detail, is to provide a personalized, microchip (GPS) denture implant which will be processed inside part of any type of prosthetics wearable inside a user's mouth and may be accessed by an external reader device.

A microchip denture implant and reader system is disclosed herein. The microchip denture implant and reader system includes a microchip including a transceiver for transmitting a wireless signal containing information relating to a user, and an external reader scanner in communication with the microchip. The microchip is adapted to be mounted in a dental prosthetic item to be applied to a mouth of the user. The external reader when activated is configured to scan and provide access to the information relating to the user on a display. The microchip and dental prosthetic item when installed in the mouth of the user are configured to provide access to the information relating to the user at a given time.

The dental prosthetic item may include a partial denture, orthodontic or orthopedic appliance, a complete fixed over dental implant supported or complete removable or over implant supported denture. The device may be used to locate, identify or retrieve personal information on a user. The external reader may be used by an authorized third-party-user to scan a cheek portion or mouth of a user and retrieve personal information on the user. The device may be used for a variety of purposes including locating lost or missing people, identifying dead people, retrieving bank information, health history or other important information in emergency situations.

The dental lab procedure may include a technician implanting the microchip in to a denture or other dental prosthetic item using proper materials. The technician grinds a cavity into a base of the denture or other dental prosthetic item and inserts the microchip within the cavity. Adhesives and acrylic materials may be used to secure and conceal the microchip properly. The dental prosthetic item may then be inserted into a mouth of a user. The information stored on the microchip may then be accessed at a later time by a third-party-user using the external reader scanner. The microchip, as manufacture and installed, is protected from damage caused by moisture.

A method of using a microchip denture implant and reader system is also disclosed herein. The method of using microchip denture implant and reader system may comprise the steps of: providing a microchip and an external reader scanner; entering and programming the microchip with information relating to a user; preparing a cavity to install the microchip within a dental prosthetic item; installing the microchip within the dental prosthetic item; installing the dental prosthetic item in a mouth of the user; scanning the microchip; and accessing the information relating to the user. The method may further comprise the step of: updating the information on the microchip, removing the dental prosthetic item, identifying the user, authorizing a third-party-user. The dental prosthetic item comprises a denture.

For purposes of summarizing the invention, certain aspects, advantages, and novel features of the invention have been described herein. It is to be understood that not necessarily all such advantages may be achieved in accordance with any one particular embodiment of the invention. Thus, the invention may be embodied or carried out in a manner that achieves or optimizes one advantage or group of advantages as taught herein without necessarily achieving other advantages as may be taught or suggested herein. The features of the invention which are believed to be novel are particularly pointed out and distinctly claimed in the concluding portion of the specification. These and other features, aspects, and advantages of the present invention will become better understood with reference to the following drawings and detailed description.

### BRIEF DESCRIPTION OF THE DRAWINGS

The figures which accompany the written portion of this specification illustrate embodiments and methods of use for the present disclosure, a microchip denture implant and reader system and method, constructed and operative according to the teachings of the present disclosure.
**FIG. 1** is a perspective view of the microchip denture implant and reader system during an 'in-use' condition, according to an embodiment of the disclosure.
**FIG. 2** is a perspective view of the microchip denture implant and reader system of **FIG. 1****,** according to an embodiment of the present disclosure.
**FIG. 3** is a perspective view of the microchip denture implant and reader system of **FIG. 1****,** according to an embodiment of the present disclosure.
**FIG. 4** is a perspective view of the microchip denture implant and reader system of **FIG. 1****,** according to an embodiment of the present disclosure.
**FIG. 5** is a flow diagram illustrating a method of use for the microchip denture implant and reader system, according to an embodiment of the present disclosure.

The various embodiments of the present invention will hereinafter be described in conjunction with the appended drawings, wherein like designations denote like elements.

### DETAILED DESCRIPTION

As discussed above, embodiments of the present disclosure relate to a dentistry and more particularly to a microchip denture implant and reader system and method as used to improve the use of dental accessories and tracking devices in combination.

Generally speaking, the microchip denture implant and reader system includes an electronic customized microchip which may be as small as 5mm. The microchip may be personalized and inserted to a person's denture (prosthetics or any device wearing inside the mouth by person) and include all personal information to be access when necessary by an external reader device. Personalized, microchip (GPS) denture implant will be processed inside part of any type of prosthetics wearable inside person's mouth and will be accessed by an external reader device by tapping or scanning through face (cheek area) or mouth of person or prosthetic device (denture) itself to access information required.

The device may be used for emergency access of a person's personal information and preferably the access and installation is agreed to by the host. A quick identification may be made on a lost or abducted person or a dead body. Personal information may include passport, identity, driver's license, social insurance, social security, and accounts. The device is configured to be used in various applications including patients/emergency rooms, hospitals, voter registration, police and security clearance, health history information retrieval (medications, allergies, specific disease that others could be infected, contact info), lost and abducted seniors, seniors with dementia or Alzheimer's, deaf , speech less, down syndrome or people on social assistance, club memberships, bank information, library access, grocery shopping, body temperature and information and many other applications as suitable. The microchip is customizable and personalized for user needs. Information may be programmed by connecting the microchip to a computer via a USB-chip reader cable.

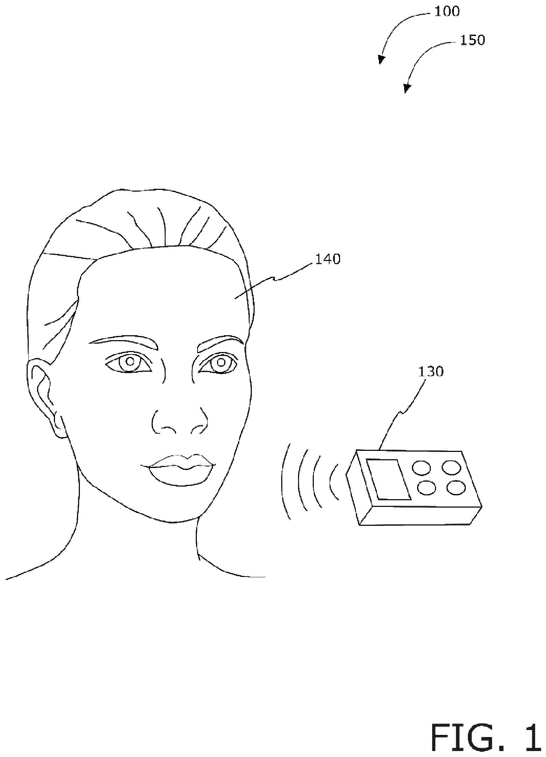

Referring now more specifically to the drawings by numerals of reference, there is shown in **FIGS. 1-4****,** various views of a microchip denture implant and reader system **100.** **FIG. 1** shows a microchip denture implant and reader system **100** during an 'in-use' condition **150,** according to an embodiment of the present disclosure. As illustrated, the microchip denture implant and reader system **100** may include a microchip **110** having a transceiver for transmitting a wireless signal containing information relating to a user **140,** and an external reader scanner **130** in communication with the microchip **110.** The microchip **110** is adapted to be mounted in a dental prosthetic item **10** to be applied to a mouth of the user **140.** The external reader **130** when activated is configured to scan and provide access to the information relating to the user **140** on a display. The microchip **110** and dental prosthetic item **10** when installed in the mouth of the user **140** are configured to provide access to the information relating to the user **140** at a given time. The device is in communication with a global positioning system to obtain geographic location information relating to the physical location of a user **140.**

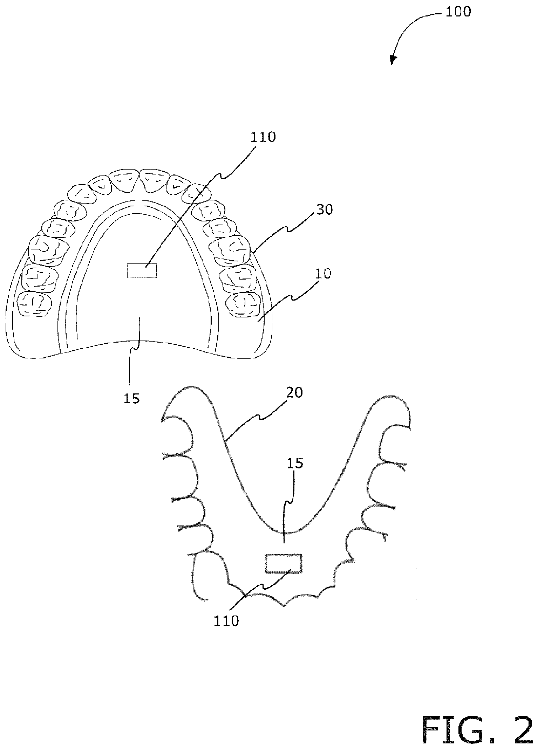

Referring now to **FIG. 2** showing a perspective view of the microchip denture implant and reader system **100** of **FIG. 1****,** according to an embodiment of the present disclosure. As above, the microchip denture implant and reader system **100** may include the microchip **110** which may be mounted in the dental prosthetic item **10** to be applied to a mouth of the user **140.** The dental prosthetic item **10** may include a partial-denture **20,** a complete-denture **30,** or other suitable orthodontic or orthopedic appliance. The dental prosthetic item **10** may be fixed or removeable, dental implant supported or not. The external reader scanner **130** comprises a display and a control panel for third-party-user manipulation. The external reader scanner **130** is portable. The external reader scanner **130** is configured to identify a plurality of different users **140.**

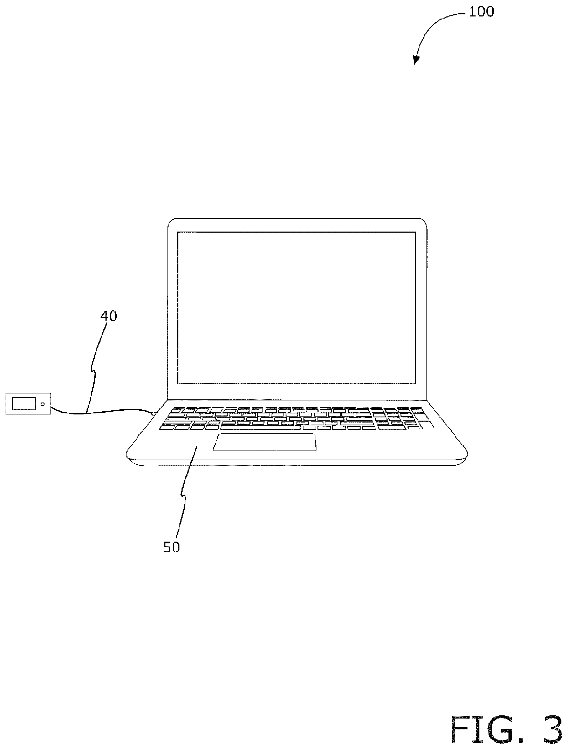

**FIG. 3** shows a perspective view of the microchip denture implant and reader system **100** of **FIG. 1****,** according to an embodiment of the present disclosure. As above, the microchip denture implant and reader system **100** may include the microchip **110** including the transceiver for transmitting a wireless signal containing information relating to the user **140,** and the external reader scanner **130** is in communication with the microchip **130.** The microchip **130** and the transceiver are configured to operate within the global positioning satellite system for determining geographical location of the user **140.** The device provides an intra-oral tracking means which may be used for locating missing or lost users **140.** The microchip **110** is configured to be personalized and store information relating to the user **140.**

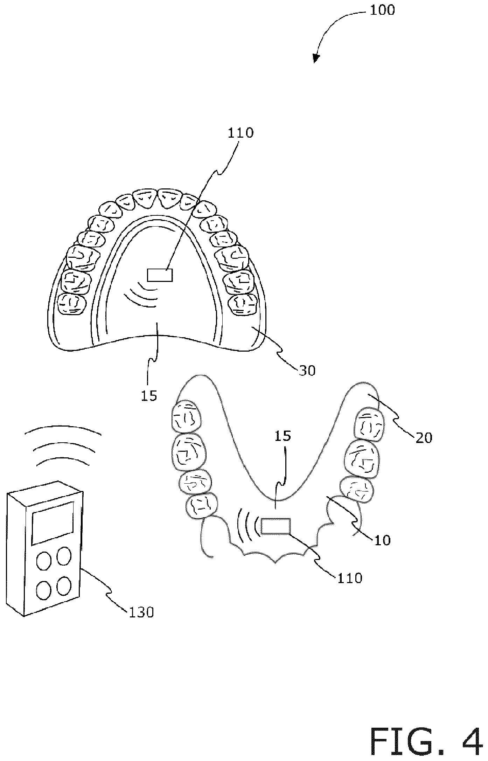

Referring now to **FIG. 4** showing a perspective view of the microchip denture implant and reader system **100** of **FIG. 1****,** according to an embodiment of the present disclosure. As above, the microchip denture implant and reader system **100** may include the microchip **110** which is adapted to be mounted on a base **15** of the dental prosthetic item **10.** The microchip **110** comprises a length and a width of approximately 4 to 6 millimeters. The microchip **110** is configured to be personalized and receive information via a USB chip reader cable **40** in communication with a computer **50.** A user or third-party user may load the microchip **110** with data and update the data accordingly as needed.

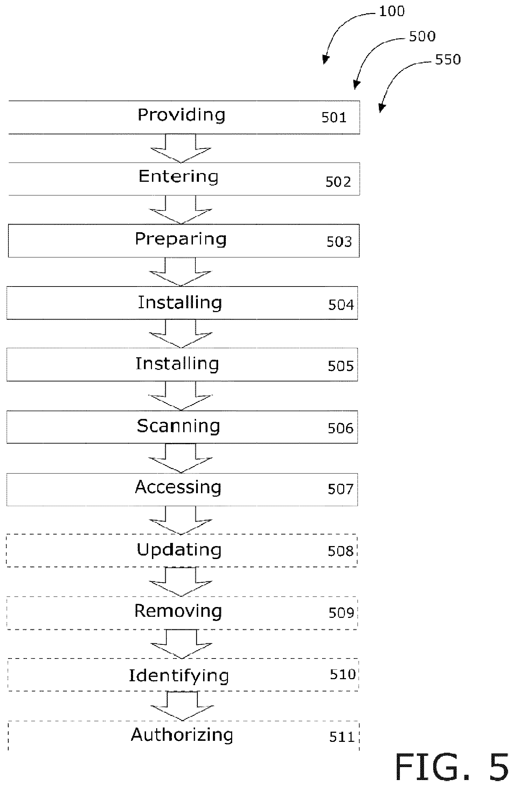

**FIG. 5** is a flow diagram **550** illustrating a method **500** of using the microchip denture implant and reader system **100,** according to an embodiment of the present disclosure. As illustrated, the method **500** of using the microchip denture implant and reader system **100** may include the steps of: step one **501,** an providing a microchip **110** and an external reader scanner **130;** step two **502,** entering and programming the microchip **110** with information relating to a user **140;** step three **503,** preparing a cavity to install the microchip 110 within a dental prosthetic item **10;** step four **504,** installing the microchip **110** within the dental prosthetic item **10;** step five **505,** installing the dental prosthetic item **10** in a mouth of the user **140;** step six **506,** scanning the microchip **110;** step seven **507,** and accessing the information relating to the user **140.** The method of further comprises the step of: step eight **508,** updating the information on the microchip **110,** step nine **509,** removing the dental prosthetic item **10,** step ten **510,** identifying the user **140,** and step eleven **511,** authorizing a third-party practitioner (care home, hospital, medical or dental clinic, ambulance, nurse, family, etc.). The dental prosthetic item **10** preferably comprises a denture.

It should be noted that steps eight **508,** nine **509,** ten **510,** and eleven **511** are optional steps and may not be implemented in all cases. Optional steps of method of use **500** are illustrated using dotted lines in **FIG. 5** so as to distinguish them from the other steps of method of use **500.** It should also be noted that the steps described in the method of use can be carried out in many different orders according to user preference. The use of "step of' should not be interpreted as "step for", in the claims herein and is not intended to invoke the provisions of 35 U.S.C. § 112(f). It should also be noted that, under appropriate circumstances, considering such issues as design preference, user preferences, marketing preferences, cost, structural requirements, available materials, technological advances, etc., other methods for using the microchip denture implant and reader system **100** (e.g., different step orders within above-mentioned list, elimination or addition of certain steps, including or excluding certain maintenance steps, etc.), are taught herein.

The embodiments of the invention described herein are exemplary and numerous modifications, variations and rearrangements can be readily envisioned to achieve substantially equivalent results, all of which are intended to be embraced within the spirit and scope of the invention. Further, the purpose of the foregoing abstract is to enable the U.S. Patent and Trademark Office and the public generally, and especially the scientist, engineers and practitioners in the art who are not familiar with patent or legal terms or phraseology, to determine quickly from a cursory inspection the nature and essence of the technical disclosure of the application.

## Claims

1. A microchip denture implant and reader system comprising:
a microchip including a transceiver for transmitting a wireless signal containing information relating to a user, said microchip adapted to be mounted in a dental prosthetic item to be applied to a mouth of said user;
an external reader scanner in communication with said microchip that when activated is configured to scan and provide access to said information relating to said user on a display; and
wherein said microchip and dental prosthetic item when installed in said mouth of said user are configured to provide access to said information relating to said user at a given time.

2. The microchip denture implant and reader system of claim 1, wherein said dental prosthetic item comprises a partial-denture.

3. The microchip denture implant and reader system of claim 1, wherein said dental prosthetic item comprises a complete-denture.

4. The microchip denture implant and reader system of claim 1, wherein said dental prosthetic item is fixed over dental implants or not.

5. The microchip denture implant and reader system of claim 1, wherein said dental prosthetic item is removeable over dental implants or not.

6. The microchip denture implant and reader system of claim 1, wherein said microchip and said transceiver are configured to operate within a global positioning satellite system for determining geographical location of the user.

7. The microchip denture implant and reader system of claim 1, wherein said microchip is configured to be personalized and store said information relating to said user.

8. The microchip denture implant and reader system of claim 7, wherein said microchip is adapted to be mounted on a base of said dental prosthetic item.

9. The microchip denture implant and reader system of claim 1, wherein said microchip comprises a length and a width of approximately 4 to 6 millimeters.

10. The microchip denture implant and reader system of claim 7, wherein said microchip is configured to be personalized and receive information via a USB chip reader cable in communication with a computer.

11. The microchip denture implant and reader system of claim 1, wherein said external reader scanner comprises a display and a control panel for third-party-user manipulation.

12. The microchip denture implant and reader system of claim 11, wherein said external reader scanner is portable.

13. The microchip denture implant and reader system of claim 1, wherein said external reader scanner is configured to identify a plurality of said users.

14. A method of using a microchip denture implant and reader system comprising the steps of:
providing a microchip and an external reader scanner;
entering and programming said microchip with information relating to a user;
preparing a cavity to install said microchip within a dental prosthetic item;
installing said microchip within said dental prosthetic item;
installing said dental prosthetic item in a mouth of said user;
scanning said microchip; and
accessing said information relating to said user.

15. The method of claim 14, further comprising the step of: updating said information on said microchip.

16. The method of claim 14, further comprising the step of: removing said dental prosthetic item.

17. The method of claim 14, further comprising the step of: identifying said user.

18. The method of claim 14, further comprising the step of: authorizing a third-party-user.

19. The method of claim 14, wherein said dental prosthetic item comprises a denture.

20. A microchip denture implant and reader system comprising:
a microchip including a transceiver for transmitting a wireless signal containing information relating to a user, said microchip adapted to be mounted in a dental prosthetic item to be applied to a mouth of said user;
wherein said microchip is configured to be personalized and store said information relating to said user;
wherein said microchip is configured to be personalized and receive information via a USB chip reader cable in communication with a computer;
an external reader scanner in communication with said microchip that when activated is configured to scan and provide access to said information relating to said user on a display;
wherein said external reader scanner comprises a display and a control panel for third-party-user manipulation;
wherein said external reader scanner is portable;
wherein said dental prosthetic item comprises a denture;
wherein said microchip is adapted to be mounted on a base of said dental prosthetic item;
wherein said microchip comprises a length and a width of approximately 4 to 6 millimeters;
wherein said microchip and said transceiver are configured to operate within a global positioning satellite system for determining geographical location of the user; and
wherein said microchip and dental prosthetic item when installed in said mouth of said user are configured to provide access to said information relating to said user at a given time.
